# EUROPEAN PATENT APPLICATION

(11) **EP 3 605 009 A1**
(43) Date of publication of application: **05.02.2020**
(21) Application number: 18801883.2
(22) Date of filing: 10.05.2018
(51) Int. Cl.: G01B 11/00, G01B 11/26

(54) **MARKER UNIT**

(30) Priority: 17.05.2017 JP 2017098382
(71) Applicant: Enplas Corporation, Kawaguchi-shi, Saitama 332-0034 (JP)
(72) Inventor: SAITO Tomohiro, Kawaguchi-shi Saitama 332-0034 (JP); FUKUDA Yasuyuki, Kawaguchi-shi Saitama 332-0034 (JP)
(74) Representative: J A Kemp LLP
(86) International application number: PCT/JP2018/018043
(87) International publication number: WO 2018/212052

(57) **Abstract**

The present invention provides a new marker unit that can improve the detection accuracy and the installation accuracy, for example. The marker unit (1) of the present invention includes: a laminate in which two or more substrates are laminated, wherein the laminate has a detection target portion detectable from an upper surface side thereof, at least at a part of a side surface of the laminate, a boundary between a first substrate (10) which is an uppermost layer of the laminate and a second substrate (11) which is in contact with a lower surface of the uppermost first substrate (10) is covered with a side surface protrusion (121) of any of the substrates constituting the laminate.

## Description

### TECHNICAL FIELD

The present invention relates to a marker unit.

### BACKGROUND ART

In the fields of augmented reality (also referred to as "AR" hereinafter), robotics, etc., a so-called visual marker is used to recognize the position, the orientation, and the like of an object. As the marker, for example, an AR marker is commonly used. As another example of the marker, for example, a marker that includes a lenticular lens arranged on a black stripe pattern has been reported (Patent Literature 1). The marker is commonly referred to as a variable moiré pattern (VMP) marker that is displaced depending on the viewing angle and is also referred to as a rotation angle scale (RAS) marker. When an image appearing on the marker is detected by a detection device such as a camera, the color gradation pattern of the image changes depending on the viewing angle of the camera with respect to the marker. Thus, the rotation angle of the marker can be determined by detecting the color gradation pattern of the marker.

The visual marker is formed on a laminate of a plurality of substrates. On the laminate, a plurality of detection reference portions serving as marks of regions (markers) to be detected by the camera are provided, and such a laminate with the detection reference portions as a whole is used as a marker unit.

### Citation List

### Patent Literature

Patent Literature 1: JP 2012-145559 A

### SUMMARY OF INVENTION

### Technical Problem

There is a demand for further improving the detection accuracy of the detection reference portion and the marker of the marker unit and the installation accuracy of installing the marker unit in an installation target object, for example.

With the foregoing in mind, it is an object of the present invention to provide a new marker unit that can improve the detection accuracy and the installation accuracy, for example.

### Solution to Problem

In order to achieve the above object, the present invention provides a marker unit including: a laminate in which two or more substrates are laminated, wherein the laminate has a detection target portion detectable from an upper surface side thereof, at least at a part of a side surface of the laminate, a boundary between a first substrate that is an uppermost layer of the laminate and a second substrate that is in contact with a lower surface of the uppermost first substrate is covered with a side surface protrusion of any of the substrates constituting the laminate.

### Advantageous Effects of Invention

According to the marker unit of the present invention, by covering the boundary with the side surface protrusion of any of the substrates, it is possible to improve the detection accuracy of detecting a detection target portion such as a marker or a detection reference portion, and to improve the installation accuracy of installing the marker unit in an installation target object.

### BRIEF DESCRIPTION OF DRAWINGS

[FIGs. 1A to 1E] FIGs. 1A to 1E each show a schematic view illustrating an exemplary marker unit according to Embodiment 1. FIG. 1A is a plan view, FIG 1B is a cross-sectional view taken along the line I-I of FIG. 1A, FIG. 1C is a plan view of an upper substrate, FIG. 1D is a plan view of a lower substrate, and FIG. 1E is a cross-sectional view showing a region surrounded by X in FIG. 1B.
[FIGs. 2A to 2C] FIG. 2A to 2C each show a cross-sectional view illustrating a variation of the marker unit according to Embodiment 1.
[FIGs. 3A to 3C] FIG. 3A to 3C each show a cross-sectional view illustrating a variation of a marker unit according to Embodiment 2.
[FIG. 4] FIG. 4 is a cross-sectional view showing a marker unit according to Embodiment 3.
[FIGs. 5A to 5D] FIGs. 5A to 5D each show a cross-sectional view illustrating a variation of a marker unit according to Embodiment 4.
[FIG. 6] FIG. 6 is a cross-sectional view showing a marker unit according to Embodiment 5.
[FIGs. 7A and 7B] FIGs. 7A and 7B each show a schematic view illustrating an exemplary marker unit according to Embodiment 7. FIG. 7A is a plan view and FIG. 7B is a cross-sectional view taken along the line II-II of FIG. 7A.
[FIGs. 8A to 8D] FIGs. 8A to 8D each show a schematic view illustrating an exemplary marker unit according to Embodiment 8. FIG. 8A is a plan view, FIG. 8B is a cross-sectional view taken along the line III-III of FIG. 8A, FIG. 8C is a plan view of an upper substrate, and FIG. 8D is a plan view of a lower substrate.

### DESCRIPTION OF EMBODIMENTS

As a result of an intensive research, the inventors of the present invention have found that, in a conventional marker unit, gaps may be caused between the laminated substrates or the marker unit may be damaged due to an impact from the outside, and that the detection accuracy of the detection target portion may be lowered or the detection target portion may be damaged due to intrusion of dust or the like between the laminated substrates, for example. On the basis of this, the inventors have made the present invention. According to the present invention, since the boundary between the substrates is covered at least at a part of the side surface of the laminate with any of the substrates constituting the laminate, it is possible to suppress the above-described problem.

Furthermore, in the marker unit, if the substrate having the detection target portion exhibiting an optical function is distorted, it may affect the detection of the detection target portion. According to the marker unit of the present invention, by having the side surface protrusion, for example, distortion of the substrate having the detection target portion can be suppressed.

Moreover, since the marker unit of the present invention has the side surface protrusion on the side surface of the laminate, for example, the installation position on an installation target object can be defined based on the side surface protrusion. Thereby, when the marker unit of the present invention is repeatedly installed on the installation target object, for example, the installation accuracy of installing the marker unit to the same place can be improved.

In the marker unit of the present invention, for example, at a corner of the side surface of the laminate, the boundary between the first substrate and the second substrate is covered with the side surface protrusion of any of the substrates constituting the laminate.

In the marker unit of the present invention, for example, over an entire periphery of the side surface of the laminate, the boundary between the first substrate and the second substrate is covered with the side surface protrusion of any of the substrates constituting the laminate.

In the marker unit of the present invention, for example, the laminate further includes a third substrate, the first substrate, the second substrate, and the third substrate are laminated in this order from the upper surface side of the laminate, the side surface of the third substrate has a side surface protrusion protruding upward at least at a corner thereof, and at the corner of the side surface of the laminate, the boundary between the first substrate and the second substrate and a boundary between the second substrate and the third substrate are covered with the side surface protrusion of the third substrate.

In the marker unit of the present invention, for example, the side surface of the third substrate has a side surface protrusion protruding upward over an entire periphery thereof, and over the entire periphery of the side surface of the laminate, the boundary between the first substrate and the second substrate and the boundary between the second substrate and the third substrate are covered with the side surface protrusion of the third substrate.

In the marker unit of the present invention, for example, the side surface of the second substrate has a side surface protrusion protruding upward at least at a corner thereof, and at the corner of the side surface of the laminate, the boundary between the first substrate and the second substrate is covered with the side surface protrusion of the second substrate.

In the marker unit of the present invention, for example, the side surface of the second substrate has a side surface protrusion protruding upward over an entire periphery thereof, and over the entire periphery of the side surface of the laminate, the boundary between the first substrate and the second substrate is covered with the side surface protrusion of the second substrate.

In the marker unit of the present invention, for example, the laminate further includes a third substrate, and the first substrate, the second substrate, and the third substrate are laminated in this order from the upper surface side of the laminate.

In the marker unit of the present invention, for example, the side surface protrusion of the second substrate is a side surface protrusion protruding upward and downward, and the boundary between the first substrate and the second substrate and the boundary between the second substrate and the third substrate are covered with the side surface protrusion of the second substrate.

In the marker unit of the present invention, for example, the side surface of the first substrate has a side surface protrusion protruding downward at least at a corner thereof, and at the corner of the side surface of the laminate, the boundary between the first substrate and the second substrate is covered with the side surface protrusion of the first substrate.

In the marker unit of the present invention, for example, the side surface of the first substrate has a side surface protrusion protruding downward over an entire periphery thereof, and over the entire periphery of the side surface of the laminate, the boundary between the first substrate and the second substrate is covered with the side surface protrusion of the first substrate.

In the marker unit of the present invention, for example, the laminate further includes a third substrate, and the first substrate, the second substrate, and the third substrate are laminated in this order from the upper surface side of the laminate.

In the marker unit of the present invention, for example, the boundary between the first substrate and the second substrate and the boundary between the second substrate and the third substrate are covered with the side surface protrusion of the first substrate.

In the marker unit of the present invention, for example, in the laminate, an upper surface of the side surface protrusion is positioned at the same level as an upper surface of the first substrate.

In the marker unit of the present invention, for example, in the laminate, an upper surface of the side surface protrusion is positioned lower than an upper surface of the first substrate.

In the marker unit of the present invention, for example, the first substrate is a substrate through which the second substrate can be visually recognized from the upper surface side thereof.

In the marker unit of the present invention, for example, the first substrate is a transparent substrate.

In the marker unit of the present invention, for example, the detection target portion includes at least one of a marker or a detection reference portion serving as a reference in detecting the marker.

In the marker unit of the present invention, for example, the first substrate is a detection target substrate having the detection target portion.

In the marker unit of the present invention, for example, when the laminate does not include the third substrate which is in contact with a lower surface of the second substrate, the second substrate is a detection target substrate having the detection target portion, and when the laminate includes the third substrate which is in contact with the lower surface of the second substrate, the third substrate is a detection target substrate having the detection target portion.

In the marker unit of the present invention, for example, when the second substrate or the third substrate is the detection target substrate, the detection target substrate has the detection target portion on an upper surface thereof, a substrate laminated above the detection target substrate has a through hole at a position corresponding to the detection target portion of the detection target substrate, and the detection target portion of the detection target substrate is exposed to the upper surface side of the laminate through the through hole.

In the marker unit of the present invention, for example, when the second substrate or the third substrate is the detection target substrate, and the detection target substrate has the detection reference portion serving as a reference in detecting a marker as the detection target portion, the detection target substrate has a protrusion protruding upward, a substrate laminated above the detection target substrate has a through hole at a position corresponding to the protrusion of the detection target substrate, in the laminate, the protrusion of the detection target substrate is positioned in the through hole of the substrate laminated above the detection target substrate, and an exposed upper surface of the protrusion serves as the detection reference portion.

In the marker unit of the present invention, for convenience, the viewing side is referred to as "upward" or "above" and the opposite side is referred to as "downward" or "below". Furthermore, in the marker unit of the present invention, the substrate positioned uppermost in the laminate is referred to as an "upper substrate", the substrate positioned lowermost in the laminate is referred to as a "lower substrate", and the substrate between the upper substrate and the lower substrate is referred to as an "interposed substrate".

Embodiments of the present invention are described below with reference to the drawings. The present invention is in no way limited or restricted by the following embodiments. In the drawings, identical parts are indicated with identical reference signs. Furthermore, for convenience in explanation, the structure of each component may be appropriately simplified, and the size, the ratio, and the like of components are not limited to the conditions shown in the drawings. Hereinafter, in the laminate including the lower substrate and the upper substrate, the lower substrate side is referred to as "downward" or "below", and the upper substrate side is referred to as "upward" or "above". Embodiments may be combined or reference can be made to one another, unless otherwise stated.

### [Embodiment 1]

The marker unit of the present embodiment includes a laminate in which a first substrate as an upper substrate, a second substrate as an interposed substrate, and a third substrate as a lower substrate are laminated, and the third substrate has a side surface protrusion.

### (Embodiment 1-1)

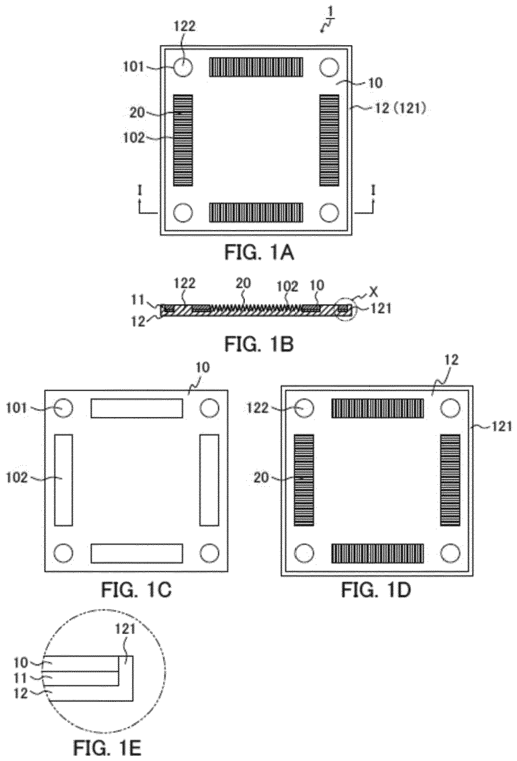

FIGs. 1A to 1E each show an exemplary marker unit of the present embodiment. FIG. 1A is a plan view of a marker unit 1 viewed from the upper surface side, FIG. 1B is a cross-sectional view of the marker unit 1 taken along the line I-I of FIG. 1A, FIG. 1C is a plan view of an upper substrate (first substrate) 10 of a marker unit 1, FIG. 1D is a plan view of a lower substrate (third substrate) 12 of the marker unit 1, and FIG. 1E is a cross-sectional view of a region surrounded by X in FIG. 1B. The cross-sectional view showing a region surrounded by X is shown without hatching.

In the laminate of the marker unit 1, the upper substrate (first substrate) 10, an interposed substrate (second substrate) 11, and the lower substrate (third substrate) 12 are laminated in this order from the upper surface side thereof, in other words, the upper substrate (first substrate) 10 is laminated on the lower substrate (third substrate) 12 via the interposed substrate (second substrate) 11.

The marker unit 1 has detection reference portions 122 and markers 20 as detection target portions detectable from the upper surface side thereof. In the marker unit 1, since the lower substrate 12 has the detection target portions (the detection reference portions 122 and the markers 20), the lower substrate 12 is also referred to as a detection target substrate having the detection target portions. In the marker unit 1, the detection target portion is a region on the upper surface side of the lower substrate 12, and is exposed to the upper surface side of the marker unit 1 on the upper surface of the lower substrate 12.

Among the detection target portions, first, the detection reference portion 122 is described below. The detection reference portion 122 generally serves as a reference site in detecting a marker. In the marker unit 1, the detection reference portion 122 is positioned at each of four corners of the marker unit 1. The lower substrate 12 has columnar protrusions (hereinafter also referred to as upper surface side protrusions) protruding upward on the upper surface thereof. On the other hand, the upper substrate 10 and the interposed substrate 11 each have through holes at positions corresponding to the detection reference portions 122 (the through holes of the upper substrate 10 are indicated by 101 and the through holes of the interposed substrate 11 are not shown). The upper surface side protrusion of the lower substrate 12 is positioned in each of the through holes of the upper substrate 10 and the interposed substrate 11 (for example, inserted into the through holes), and the upper surface thereof is exposed from the marker unit 1 in the upward direction. The exposed upper surface of the upper surface side protrusion serves as the detection reference portion 122.

Next, the marker 20 is described below. The type of the marker 20 is not particularly limited, and is, for example, a variable moiré pattern (VMP) or the like. In the marker unit 1, the marker 20 is positioned between the detection reference portions 122. The lower substrate 12 has continuous peak-shaped protrusions on the upper surface thereof, for example, at sites where the markers 20 are to be formed. On the other hand, the upper substrate 10 and the interposed substrate 11 each have through holes at positions corresponding to the markers 20 (the through holes of the upper substrate 10 are indicated by 102 and the through holes of the interposed substrate 11 are not shown). The upper surface of each site of the lower substrate 12 where the marker 20 is to be formed (the peak-shaped protrusion) is exposed from the marker unit 1 in the upward direction because of the through hole 102 of the upper substrate 10 and the through hole of the interposed substrate 11. Each of the exposed continuous peak-shaped protrusions serves as the marker 20.

In the marker unit 1, the lower substrate 12 has a side surface protrusion 121 protruding upward over the entire periphery of the side surface thereof. In the marker unit 1, the upper substrate 10 is laminated on the lower substrate 12 via the interposed substrate 11, and the boundary between the upper substrate 10 and the interposed substrate 11 and the boundary between the interposed substrate 11 and the lower substrate 12 are covered with the side surface protrusion 121 of the lower substrate 12 over the entire periphery of the side surface of the marker unit 1.

Since the boundary between the substrates is covered at the side surface of the marker unit 1 as described above, for example, the following can be achieved. That is, the marker unit 1 can prevent intrusion of dust or the like from the boundary at the side surface, for example. As a result, for example, it is possible to prevent lowering of detection accuracy caused by dust or the like and to prevent damage caused by dust or the like, in the visual recognition from above the marker unit 1. Furthermore, the side surface of the marker unit 1 is covered with the side surface protrusion 121 of the lower substrate 12, thereby preventing the respective substrates from being separated from each other, for example. Moreover, the side surface of the marker unit 1 is covered with the side surface protrusion 121 of the lower substrate 12, thereby preventing the upper substrate 10 and the interposed substrate 11 from being distorted with respect to the lower substrate 12, for example. Furthermore, in the marker unit 1, since the lower substrate 12 has the detection target portions (detection reference portions 122, markers 20) and the side surface protrusion 121, for example, the detection target portions can be formed at the same time as forming the lower substrate 12. Since the outer shape of the marker unit 1 is determined by the lower substrate 12 having the side surface protrusion 121, the positional deviation of the detection target portion in the entire marker unit 1 can be prevented. In particular, since the detection reference portion 122 among the detection target portions serves as a reference in detecting the marker 20, the marker unit 1 can form the detection reference portion 122 therein with higher accuracy. In addition, since the outer shape of the marker unit 1 is determined by the lower substrate 12 having the side surface protrusion 121, at the time of repeatedly installing the marker unit 1 in the installation target object where the marker unit is to be installed, the installation accuracy for installing the marker unit to the same place can be improved by using the side surface protrusion 121, for example.

In the marker unit 1, the upper surface of the side surface protrusion 121 of the lower substrate 12 is positioned at the same level as the upper surface of the upper substrate 10. The position of the upper surface of the side surface protrusion 121 is not particularly limited as long as the side surface protrusion 121 can cover the boundary as described above. In detecting the marker unit 1 from above, it is preferable that the upper surface of the side surface protrusion 121 is at the same level as the upper surface of the upper substrate 10, for example, because the effect of the side surface protrusion casting a shadow can be sufficiently suppressed. It is to be noted that, "the upper surface of the side surface protrusion 121 and the upper surface of the upper substrate 10 are "at the same level"" means that the heights of the both are substantially the same, and a difference due to the degree of dimensional tolerance is included in "at the same level". More specifically, for example, when the thickness of the entire laminate is 1.5 to 3 mm and the dimensional tolerance is ±0.1 mm, the range of ±0.1 mm with respect to the height of the upper surface of the upper substrate 10 is included in "the same level".

In the present embodiment, the detection target substrate having the detection target portions (detection reference portions and markers) is the lower substrate. The present invention, however, is not limited thereto, and for example, the upper substrate may have the detection target portions as described below. In the present invention, it is preferable to protect particularly the detection target substrate having the detection target portions by covering the boundary with the side surface protrusion. Therefore, the marker unit of the present embodiment is particularly useful when, for example, the detection target substrate having the detection target portion is at least one of the upper substrate, the interposed substrate, and the lower substrate, or is at least one of the upper substrate and the lower substrate. The same applies to the following embodiments.

### (Embodiment 1-2)

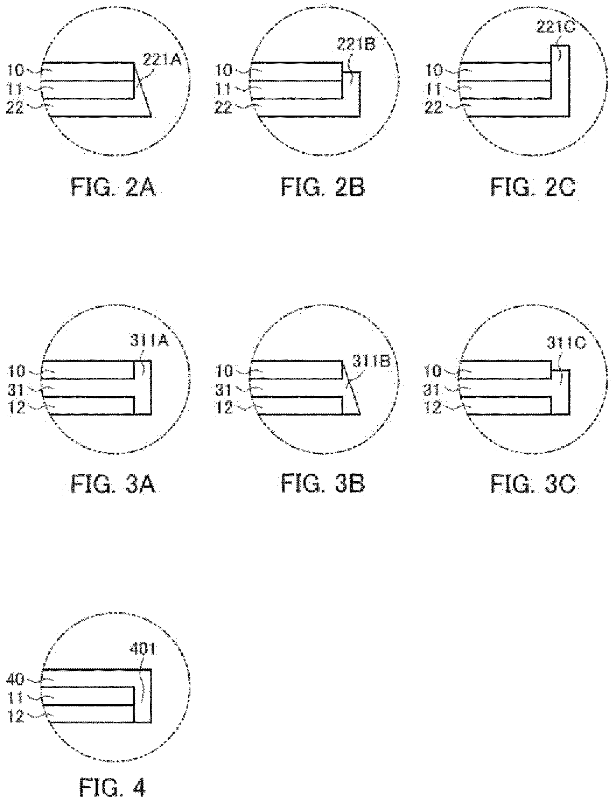

FIG. 2A shows an exemplary marker unit of the present embodiment. FIG. 2A is a cross-sectional view of the marker unit of the present embodiment showing a region surrounded by X in the cross-sectional view of FIG. 1B. The cross-sectional view showing a region surrounded by X is shown without hatching.

In the marker unit of FIG. 2A, a side surface protrusion 221A of a lower substrate (third substrate) 22 covers the boundary between the upper substrate (first substrate) 10 and the interposed substrate (second substrate) 11 and the boundary between the interposed substrate (second substrate) 11 and the lower substrate (third substrate) 22. In the present embodiment, the outer peripheral surface of the side surface protrusion 221A is tapered to be narrowed toward the inner peripheral surface side thereof as it is directed upward, and the upper surface of the side surface protrusion 221A is positioned at the same level as the upper surface of the upper substrate 10.

According to the present embodiment, the boundary between the upper substrate 10 and the interposed substrate 11 and the boundary between the interposed substrate 11 and the lower substrate 22 are covered, and the upper surface of the side surface protrusion 221A is positioned at the same level as the upper surface of the upper substrate 10, thereby protecting the respective boundaries, and further, for example, sufficiently reducing the possibility that the side surface protrusion 221A affects the detection from above the marker unit 1.

### (Embodiment 1-3)

FIG. 2B shows an exemplary marker unit of the present embodiment. FIG. 2B is a cross-sectional view of the marker unit of the present embodiment showing a region surrounded by X in the cross-sectional view of FIG. 1B.

In the marker unit of FIG. 2B, a side surface protrusion 221B of the lower substrate (third substrate) 22 covers the boundary between the upper substrate (first substrate) 10 and the interposed substrate (second substrate) 11 and the boundary between the interposed substrate (second substrate) 11 and the lower substrate (third substrate) 22. In the present embodiment, the outer peripheral surface of the side surface protrusion 221B extends in a direction perpendicular to the lower surface of the lower substrate 22, and the upper surface of the side surface protrusion 221B is positioned lower than the upper surface of the upper substrate 10.

According to the present embodiment, the boundary between the upper substrate 10 and the interposed substrate 11 and the boundary between the interposed substrate 11 and the lower substrate 22 are covered, and the upper surface of the side surface protrusion 221B is positioned lower than the upper surface of the upper substrate 10, thereby protecting the respective boundaries, and further, for example, sufficiently reducing the possibility that the side surface protrusion 221B affects the detection from above the marker unit 1.

### (Embodiment 1-4)

FIG. 2C shows an exemplary marker unit of the present embodiment. FIG. 2C is a cross-sectional view of the marker unit of the present embodiment showing a region surrounded by X in the cross-sectional view of FIG. 1B.

The marker unit of FIG. 2C is the same as that of FIG. 2B except that the upper surface of the side surface protrusion 221C protrudes upward to be higher than the upper surface of the upper substrate (first substrate) 10.

According to the present embodiment, the boundary between the upper substrate 10 and the interposed substrate 11 and the boundary between the interposed substrate 11 and the lower substrate 22 are covered, thereby protecting the respective boundaries.

The marker unit of the present embodiment may further include another substrate below the lower substrate (third substrate).

### [Embodiment 2]

The marker unit of the present embodiment includes a laminate in which a first substrate as an upper substrate, a second substrate as an interposed substrate, and a third substrate as a lower substrate are laminated, and the second substrate has a side surface protrusion. FIGs. 3A to 3C each show an exemplary marker unit of the present embodiment. FIGs. 3A to 3C each show a cross-sectional view of the marker unit of the present embodiment illustrating a region surrounded by X in the cross-sectional view of FIG. 1B. Regarding the marker unit of Embodiment 2, reference can be made to the description of Embodiment 1 except for the second substrate (interposed substrate) having the side surface protrusion.

### (Embodiment 2-1)

In the marker unit of FIG. 3A, a side surface protrusion 311A of an interposed substrate (second substrate) 31 covers the boundary between the upper substrate (first substrate) 10 and the interposed substrate (second substrate) 31 and the boundary between the interposed substrate (second substrate) 31 and the lower substrate (third substrate) 12. Specifically, the side surface protrusion 311A protrudes upward and downward, and covers the boundary between the upper substrate 10 and the interposed substrate 31 with a protrusion in the upward direction and covers the boundary between the interposed substrate 31 and the lower substrate 12 with a protrusion in the downward direction. In the present embodiment, the outer peripheral surface of the side surface protrusion 311A of the lower substrate 31 extends in a direction perpendicular to the lower surface of the lower substrate 12, and the upper surface of the side surface protrusion 311A is positioned at the same level as the upper surface of the upper substrate 10.

According to the present embodiment, the boundary between the upper substrate 10 and the interposed substrate 31 and the boundary between the interposed substrate 31 and the lower substrate 12 are covered, and the upper surface of the side surface protrusion 311A is positioned at the same level as the upper surface of the upper substrate 10, thereby protecting the respective boundaries, and further, for example, sufficiently reducing the possibility that the side surface protrusion 311A affects the detection from above the marker unit 1.

In the present embodiment, the lower substrate (third substrate) serves as the detection target substrate having the detection target portions (detection reference portions and markers) as in Embodiment 1. The present invention, however, is not limited thereto, and for example, the upper substrate (first substrate) may have the detection target portions as described below. In the present invention, it is preferable to protect particularly the detection target substrate having the detection target portions by covering the boundary with the side surface protrusion. Therefore, the marker unit of the present embodiment is particularly useful when, for example, the detection target substrate having the detection target portion is at least one of the upper substrate, the interposed substrate, and the lower substrate, or is at least one of the upper substrate and the lower substrate. The same applies to the following embodiments.

### (Embodiment 2-2)

FIG. 3B shows an exemplary marker unit of the present embodiment. FIG. 3B is a cross-sectional view of the marker unit of the present embodiment showing a region surrounded by X in the cross-sectional view of FIG. 1B.

In the marker unit of FIG. 3B, a side surface protrusion 311B of the interposed substrate (second substrate) 31 covers the boundary between the upper substrate (first substrate) 10 and the interposed substrate (second substrate) 31 and the boundary between the interposed substrate (second substrate) 31 and the lower substrate (third substrate) 12 in the same manner as in Embodiment 2-1. In the present embodiment, the outer peripheral surface of the side surface protrusion 311B is tapered to be narrowed toward the inner peripheral surface side thereof as it is directed upward, and the upper surface of the side surface protrusion 311B is positioned at the same level as the upper surface of the upper substrate 10.

According to the present embodiment, the boundary between the upper substrate 10 and the interposed substrate 31 and the boundary between the interposed substrate 31 and the lower substrate 12 are covered, and the upper surface of the side surface protrusion 311B is positioned at the same level as the upper surface of the upper substrate 10, thereby protecting the respective boundaries, and further, for example, sufficiently reducing the possibility that the side surface protrusion 311B affects the detection from above the marker unit 1.

### (Embodiment 2-3)

FIG. 3C shows an exemplary marker unit of the present embodiment. FIG. 3C is a cross-sectional view of the marker unit of the present embodiment showing a region surrounded by X in the cross-sectional view of FIG. 1B.

The marker unit of FIG. 3C is the same as that of FIG. 3A except that the upper surface of a side surface protrusion 311C is positioned lower than the upper surface of the upper substrate (first substrate) 10. According to the present embodiment, the boundary between the upper substrate 10 and the interposed substrate 31 and the boundary between the interposed substrate (second substrate) 31 and the lower substrate 12 are covered, and the upper surface of the side surface protrusion 311C is positioned lower than the upper surface of the upper substrate 10, thereby protecting the respective boundaries, and further, for example, sufficiently reducing the possibility that the side surface protrusion 311C affects the detection from above the marker unit 1.

### [Embodiment 3]

The marker unit of the present embodiment includes a laminate in which a first substrate as an upper substrate, a second substrate as an interposed substrate, and a third substrate as a lower substrate are laminated, and the first substrate has a side surface protrusion. FIG. 4 shows an exemplary marker unit of the present embodiment. FIG. 4 is a cross-sectional view of a marker unit of the present embodiment showing a region surrounded by X in the cross-sectional view of FIG. 1B. Regarding the marker unit of Embodiment 3, reference can be made to the description of the foregoing embodiments except for the first substrate (upper substrate) having the side surface protrusion.

In the marker unit of FIG. 4, a side surface protrusion 401 of a first substrate (upper substrate) 40 protrudes downward and covers the boundary between the first substrate (upper substrate) 40 and the second substrate (interposed substrate) 11 and the boundary between the second substrate (interposed substrate) 11 and the third substrate (lower substrate) 12. In the present embodiment, the outer peripheral surface of the side surface protrusion 401 of the upper substrate 40 extends in a direction perpendicular to the lower surface of the lower substrate 12, and the lower surface of the side surface protrusion 401 is positioned at the same level as the lower surface of the lower substrate 12.

According to the present embodiment, the boundary between the upper substrate 40 and the interposed substrate 11 and the boundary between the interposed substrate 11 and the lower substrate 12 are covered, thereby protecting the respective boundaries, and further, for example, sufficiently reducing the possibility that the side surface protrusion 401 affects the detection from above the marker unit 1.

In the present embodiment, the lower substrate (third substrate) serves as the detection target substrate having the detection target portions (detection reference portions and markers) as in Embodiment 1. The present invention, however, is not limited thereto, and for example, the upper substrate (first substrate) may have the detection target portions as described below. In the present invention, it is preferable to protect particularly the detection target substrate having the detection target portions by covering the boundary with the side surface protrusion. Therefore, the marker unit of the present embodiment is particularly useful when, for example, the detection target substrate having the detection target portion is at least one of the upper substrate, the interposed substrate, and the lower substrate, or is at least one of the upper substrate and the lower substrate.

### [Embodiment 4]

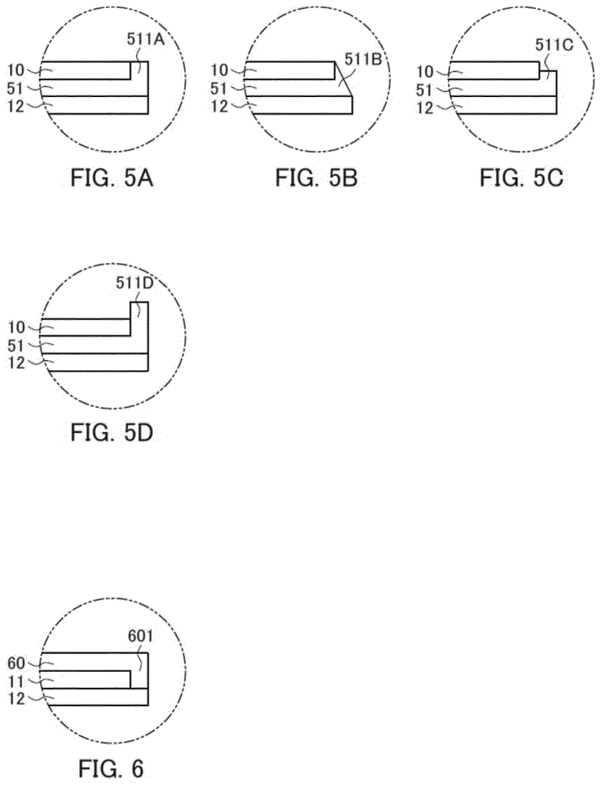

The marker unit of the present embodiment includes a laminate in which a first substrate as an upper substrate, a second substrate as an interposed substrate, and a third substrate as a lower substrate are laminated, and the second substrate has a side surface protrusion. FIGs. 5A to 5C each show an exemplary marker unit of the present embodiment. FIGs. 5A to 5C each show a cross-sectional view of the marker unit of the present embodiment illustrating a region surrounded by X in the cross-sectional view of FIG. 1B. Regarding the marker unit of Embodiment 4, reference can be made to the description of the foregoing embodiments except for the second substrate (interposed substrate) having the side surface protrusion.

### (Embodiment 4-1)

FIG. 5A shows an exemplary marker unit of the present embodiment. FIG. 5A is a cross-sectional view of the marker unit of the present embodiment showing a region surrounded by X in the cross-sectional view of FIG. 1A.

In the marker unit of FIG. 5A, an upper surface of a side surface protrusion 511A of the interposed substrate (second substrate) 51 protrudes upward and covers the boundary between the upper substrate (first substrate) 10 and the interposed substrate (second substrate) 51. In the present embodiment, the outer peripheral surface of the side surface protrusion 511A of the lower substrate 51 extends in a direction perpendicular to the lower surface of the lower substrate 12, and the upper surface of the side surface protrusion 511A is at the same level as the upper surface of the upper substrate 10.

According to the present embodiment, the boundary between the upper substrate 10 and the interposed substrate 51 is covered and the upper surface of the side surface protrusion 511A is positioned at the same level as the upper surface of the upper substrate 10, thereby protecting the boundary, and further, for example, sufficiently reducing the possibility that the side surface protrusion 511A affects the detection from above the marker unit 1.

### (Embodiment 4-2)

In the marker unit of FIG. 5B, a side surface protrusion 511B of the interposed substrate (second substrate) 51 protrudes upward and covers the boundary between the upper substrate (first substrate) 10 and the interposed substrate (second substrate) 51. In the present embodiment, the outer peripheral surface of the side surface protrusion 511B is tapered to be narrowed toward the inner peripheral surface side thereof as it is directed upward, and the upper surface of the side surface protrusion 511B is positioned at the same level as the upper surface of the upper substrate 10.

According to the present embodiment, the boundary between the upper substrate 10 and the interposed substrate 51 is covered and the upper surface of the side surface protrusion 511B is positioned at the same level as the upper surface of the upper substrate 10, thereby protecting the boundary, and further, for example, sufficiently reducing the possibility that the side surface protrusion 511B affects the detection from above the marker unit 1.

### (Embodiment 4-3)

FIG. 5C shows an exemplary marker unit of the present embodiment. FIG. 5C is a cross-sectional view of the marker unit of the present embodiment showing a region surrounded by X in the cross-sectional view of FIG. 1B.

The marker unit of FIG. 5C is the same as that of FIG. 5A except that the upper surface of the side surface protrusion 511C is positioned lower than the upper surface of the upper substrate (first substrate) 10. According to the present embodiment, the boundary between the upper substrate 10 and the interposed substrate 51 is covered and the upper surface of the side surface protrusion 511C is positioned lower than the upper surface of the upper substrate 10, thereby protecting the boundary, and further, for example, sufficiently reducing the possibility that the side surface protrusion 511C affects the detection from above the marker unit 1.

### (Embodiment 4-4)

The marker unit of FIG. 5D is the same as that of FIG. 5A except that the upper surface of a side surface protrusion 511D protrudes upward to be higher than the upper surface of the upper substrate (first substrate) 10. According to the present embodiment, the boundary between the upper substrate 10 and the interposed substrate 51 is covered, thereby protecting the boundary.

In the present embodiment, the lower substrate (third substrate) serves as the detection target substrate having the detection target portions (detection reference portions and markers) as in Embodiment 1. The present invention, however, is not limited thereto, and for example, the upper substrate (first substrate) may have the detection target portions as described below. In the present invention, it is preferable to protect particularly the detection target substrate having the detection target portions by covering the boundary with the side surface protrusion. Therefore, the marker unit of the present embodiment is particularly useful when, for example, the detection target substrate having the detection target portion is at least one of the upper substrate and the interposed substrate, or is the upper substrate. The same applies to the following embodiments.

### [Embodiment 5]

The marker unit of the present embodiment includes a laminate in which a first substrate as an upper substrate, a second substrate as an interposed substrate, and a third substrate as a lower substrate are laminated, and the first substrate has a side surface protrusion. FIG. 6 shows an exemplary marker unit of the present embodiment. FIG. 6 is a cross-sectional view of the marker unit of the present embodiment showing a region surrounded by X in the cross-sectional view of FIG. 1B. Regarding the marker unit of Embodiment 5, reference can be made to the description of the foregoing embodiments except for the upper substrate (first substrate) having the side surface protrusion.

In the marker unit of FIG. 6, a side surface protrusion 601 of an upper substrate (first substrate) 60 protrudes downward and covers the boundary between the upper substrate (first substrate) 60 and the interposed substrate (second substrate) 11. In the present embodiment, the outer peripheral surface of the side surface protrusion 601 of the upper substrate 60 extends in a direction perpendicular to the lower surface of the lower substrate (third substrate) 12, and the lower surface of the side surface protrusion 601 is in contact with the upper surface of the lower substrate 12.

According to the present embodiment, the boundary between the upper substrate 60 and the interposed substrate 11 is covered, thereby protecting the boundary, and further, for example, sufficiently reducing the possibility that the side surface protrusion 601 affects the detection from above the marker unit 1.

In the present embodiment, the lower substrate (third substrate) serves as the detection target substrate having the detection target portions (detection reference portions and markers) as in Embodiment 1. The present invention, however, is not limited thereto, and for example, the upper substrate (first substrate) may have the detection target portions as described below. In the present invention, it is preferable to protect particularly the detection target substrate having the detection target portions by covering the boundary with the side surface protrusion. Therefore, the marker unit of the present embodiment is particularly useful when, for example, the detection target substrate having the detection target portion is at least one of the upper substrate and the interposed substrate, or is the upper substrate.

### [Embodiment 6]

In the marker unit of the above-described embodiments, the side surface protrusion covering the boundary is provided over the entire periphery of the side surface of any of the substrates. The present invention is not limited thereto, and the boundary between the first substrate which is the uppermost layer of the laminate and the second substrate which is in contact with the lower surface of the uppermost first substrate may be covered with the side surface protrusion of any of the substrates constituting the laminate, for example, at least at a part of the side surface of the laminate.

It is preferable that at least a part of a side surface of the laminate includes, for example, a corner of the laminate. Since the corner of the laminate is highly likely to receive an impact from the outside, for example, by covering the corner with the side surface protrusion, separation between the substrates and intrusion of dust or the like can be efficiently prevented. Furthermore, since there is a case of providing a detection reference portion serving as a reference for detecting the marker in the vicinity of the corner of the laminate, for example, as described above, the effect on the detection reference portion can be effectively prevented.

It is preferable that at least a part of the side surface of the laminate include, for example, the vicinity of the marker placement site in the laminate. Thereby, for example, separation between the substrates and intrusion of dust or the like in the vicinity of the marker can be effectively prevented.

### [Embodiment 7]

The marker unit of each of the embodiments is a three-layer structure laminate in which a first substrate, a second substrate, and a third substrate are laminated. The marker unit of the present invention, however, is not limited thereto, and may be, for example, a two-layer structure laminate including the first substrate and the second substrate.

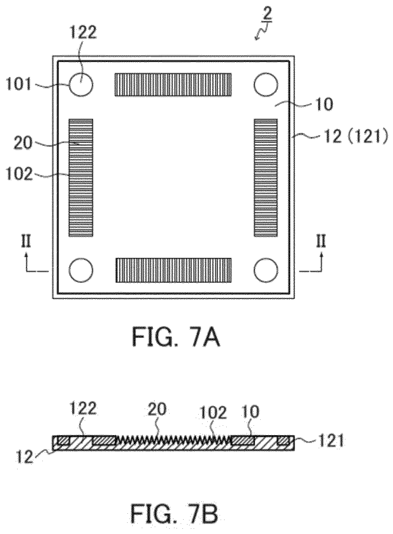

FIGs. 7A and 7B each show an example of a two-layer structure laminate as a marker unit of the present embodiment. FIG. 7A is a plan view of the marker unit 2 viewed from the upper surface side and FIG. 7B is a cross-sectional view taken along the line II-II of the marker unit 2.

The marker unit 2 is the same as that of Embodiment 1 except that it does not include an interposed substrate, and an upper substrate (first substrate) 10 and a lower substrate (second substrate) 12 are laminated in this order from the upper surface side thereof. In other words, in the marker unit 2, the upper substrate 10 is laminated on the lower substrate 12, and the lower substrate 12 has the side surface protrusion 121.

According to the present embodiment, the boundary between the upper substrate 10 and the lower substrate 12 is covered and the upper surface of the side surface protrusion 121 is positioned at the same level as the upper surface of the upper substrate 10, thereby protecting the boundary, and further, for example, sufficiently reducing the possibility that the side surface protrusion 121 affects the detection from above the marker unit 2.

The marker unit 2 of the present embodiment may have a configuration in which the side surface protrusion of the lower substrate has a shape as shown in each of FIGs. 2A to 2C as in Embodiment 1, for example, except that the marker unit 2 does not include an interposed substrate, and the upper substrate is laminated on the lower substrate. The marker unit 2 of the present embodiment may have a configuration in which the side surface protrusion of the upper substrate has a shape as shown in FIG. 4 as in Embodiment 3, for example, except that the marker unit 2 does not include an interposed substrate, and the upper substrate is laminated on the lower substrate.

### [Embodiment 8]

The marker unit of each of the foregoing embodiments has a configuration in which the lower substrate (the third substrate of Embodiments 1 to 6 and the second substrate of Embodiment 7) has a marker. The marker unit of the present invention, however, is not limited thereto, and for example, the upper substrate (first substrate) may have a marker.

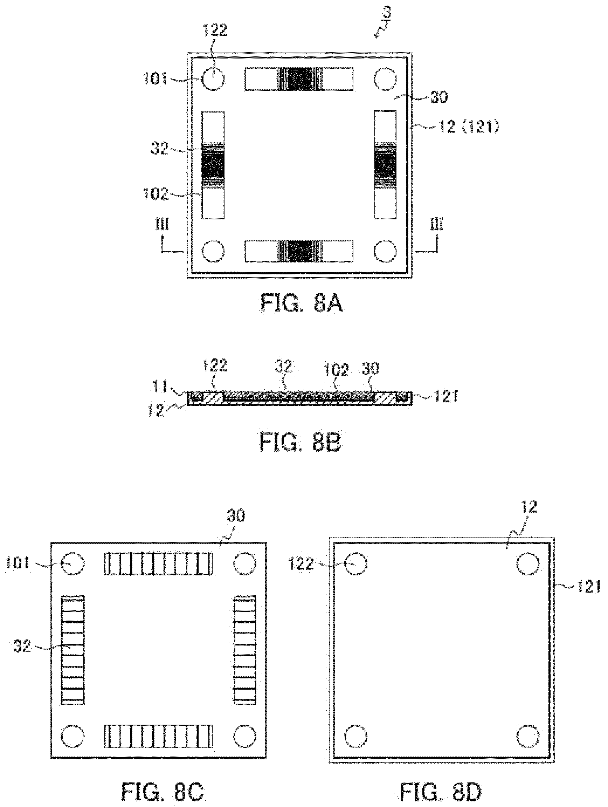

FIGs. 8A to 8D each show an example in which the upper substrate (first substrate) has markers as a marker unit of the present embodiment. FIG. 8A is a plan view of a marker unit 3 viewed from the upper surface side and FIG. 8B is a cross-sectional view taken along the line III-III of the marker unit 3. The marker unit 3 is the same as that of Embodiment 1 except that an upper substrate 30 has markers 32. The marker unit 3 may be the same as the marker units of Embodiments 2 to 6 except that the marker unit has the marker on the upper substrate (first substrate) instead of the marker on the lower substrate (third substrate). The marker unit 3 may be the same as the marker unit of Embodiment 7 except that the marker unit has the marker on the upper substrate (first substrate) instead of the marker on the lower substrate (second substrate).

While the marker unit of the present invention has been described above with reference to illustrative embodiments, the marker unit of the present invention is not limited thereto.

While the detection reference portion is the upper surface of the upper surface side protrusion of the lower substrate in the foregoing embodiments, the present invention is not limited thereto. In the case where the upper surface of the lower substrate is flat, for example, the upper surface area of the lower substrate exposed to the upper surface side of the marker unit though the through hole of the interposed substrate and the through hole of the upper substrate when the interposed substrate and the upper substrate are laminated on the lower substrate may be determined as the detection reference portion.

When the lower substrate has the upper surface side protrusion, the upper surface of the upper surface side protrusion may be, for example, flat with the upper surface of the upper substrate (no step therebetween), higher (protruding) than the upper surface of the upper substrate, or lower than the upper surface of the upper substrate.

When the lower substrate has the upper surface side protrusion, it is preferable that the upper surface side protrusion of the lower substrate, the through hole of the upper substrate, and the through hole of the interposed substrate (optional) have substantially the same shape, and that the plane area of the former and the hole area of the latter are substantially the same.

The shape of the detection reference portion of the lower substrate may be, for example, a circular shape, a polygonal shape, or the like. Examples of the circular shape include a perfect circle and an ellipse, and a perfect circle is preferable. The polygonal shape may be, for example, a polygon such as a triangle or a quadrilateral, and examples of the quadrilateral include a square and a rectangle. The shapes of the through holes of the upper substrate and the interposed substrate are not particularly limited, and may be, for example, a circular shape, a polygonal shape, or the like.

In the marker unit of the present invention, the detection reference portion serves as a mark of a region to be detected when the marker is detected by a detection device such as a camera, for example. In the marker unit of the present invention, the number and position of the detection reference portions are not particularly limited.

When the marker unit of the present invention has a marker as the detection target portion, as described above, the upper substrate or the lower substrate may have the marker, for example. When the marker unit is a two-layer structure marker unit, the lower substrate is the second substrate, and when the marker unit is a three-layer structure marker unit, the lower substrate is the third substrate.

The marker is not particularly limited, and may be, for example, the above-described VMP marker (RAS marker), a two-dimensional pattern code, or the like. Examples of the two-dimensional pattern code include an AR marker and a QR marker. Examples of the AR marker include an ARToolKit, an ARTag, a CyberCode, and an ARToolKitPlus. In the marker unit of the present invention, the position and the number of the markers are not particularly limited.

In the marker unit of the present invention, the method for forming the marker is not particularly limited. When the lower substrate has the marker, the marker can be formed, for example, as follows. That is, in a desired region of the marker unit of the present invention, for example, valley-shaped and peak-shaped irregularities are formed on the upper surface of the lower substrate, whereby the desired region can serve as the marker.

When the upper substrate has the marker, the marker can be formed, for example, as follows. That is, in a desired region of the marker unit of the present invention, for example, a lens structure such as a lenticular lens is formed on the upper surface side of the upper substrate, and a pattern such as a stripe pattern or a dot pattern is formed on the lower surface side of the upper substrate, whereby the desired region can serve as the marker.

The marker of the upper substrate is described below in detail with reference to a VMP marker.

The marker includes a lens main body having a plurality of lens units, and the plurality of lens units are arranged continuously in the planar direction. A direction in which the lens units are arranged is referred to as an arrangement direction or a width direction, and a direction perpendicular to the arrangement direction in the planar direction is referred to as a length direction.

The lens unit in the lens main body may be, for example, a cylindrical lens. The lens main body is, for example, a light-transmitting member. The light-transmitting member is not particularly limited, and may be formed of a resin, glass, or the like, for example. Examples of the resin include polycarbonate, acrylic resin (e.g., polymethyl methacrylate (PMMA)), cycloolefin polymer (COP), and cycloolefin copolymer (COC).

The lens main body includes a light-condensing portion having a function of condensing light on one surface side and a plurality of pattern forming sections on the other surface side. The pattern forming sections are, for example, lines that extend along the length direction of the lens main body, and a stripe pattern is formed by a plurality of lines or a dot pattern is formed by a plurality of dots on the other surface side of the lens main body. The plurality of pattern forming sections are projected on the upper surface side of the lens main body as an optically detectable image and can be optically detected, for example.

The pattern forming section needs only to be optically detectable, and may be a colored film, for example. The color of the colored film is not particularly limited, and may be black, for example. The colored film may be, for example, a coating film, and can be formed of a coating material. The coating material is not particularly limited, and may be a liquid coating material or a powder coating material, for example. The coating film can be formed by coating and/or solidifying the coating material, for example. The coating method may be, for example, spray coating, screen printing, or the like. The solidifying method may be, for example, drying of the liquid coating material, curing of a curable component (e.g., a radical polymerizable compound or the like) in the coating material, baking of the powder coating material, or the like.

The pattern formed by the pattern forming sections is by no means limited. For example, when the pattern is the above-described stripe pattern, the density of the color forming the stripe pattern may be uniform, or the stripe pattern may have color gradations, for example.

When the marker is placed on, for example, a white object, among light rays that have entered from the upper surface of the lens main body of the marker, the light rays that have reached the pattern forming sections are absorbed by the pattern forming sections (e.g., black colored films), and the other light rays pass through the lens main body and are reflected from the surface of the object. Accordingly, on the upper surface of the lens main body, images of the pattern forming sections (e.g., black lines) are projected onto a white background. Thus, in the marker unit, the substrate (for example, the interposed substrate in the case of a three-layer structure or the lower substrate in the case of a two-layer structure) on which the upper substrate having the marker is laminated functions as a reflector, and therefore, for example, when the pattern forming section of the marker is formed in black, it is preferable that the upper surface thereof be white.

In the case where the marker unit of the present invention is a two-layer structure marker unit, the combination of the colors of the lower substrate (second substrate) and the upper substrate (first substrate) is not particularly limited, and can be, for example, any combination as long as the detection target portion of the lower substrate and the detection target portion of the upper substrate can be detected. The combination of the colors of the lower substrate and the upper substrate may be, for example, as follows. The lower substrate has, for example, a black upper surface, and the upper substrate is, for example, transparent or white. When the upper substrate is transparent, the side surface of the upper substrate may be colored. With the colored side surface of the upper substrate, stray light entering the marker unit from the side surface of the upper substrate can be suppressed, and the possibility of affecting detection from above can be sufficiently reduced.

In the case where the marker unit of the present invention is a three-layer structure marker unit, the combination of the colors of the lower substrate (third substrate), the interposed substrate (second substrate), and the upper substrate (first substrate) is not particularly limited, and can be, for example, any combination as long as the detection target portion of the lower substrate and the detection target portion of the upper substrate can be detected. The colors of the lower substrate and the upper substrate are, for example, the same as those described above. The color of the interposed substrate can be appropriately set in accordance with, for example, the upper substrate, the lower substrate, the marker, and the like. The color of the upper surface of the interposed substrate is, for example, a color different from the color of the detection target portion of the lower substrate the detection target portion of the upper substrate. Furthermore, it is preferable that the combination of the color of the upper surface of the interposed substrate, the color of the detection target portion of the lower substrate, and the color of the detection target portion of the upper substrate be, for example, a combination that easily provides the contrast. In this manner, by providing contrast by the interposed substrate, for example, the detection accuracy of the detection target portion of the lower substrate and the detection target portion of the upper substrate can be further improved, for example.

The combinations of the colors of the lower substrate, the interposed substrate, and the upper substrate may be, for example, as follows. The lower substrate has, for example, a black upper surface, the interposed substrate has, for example, a white upper surface, and the upper substrate is, for example, transparent. The interposed substrate may be also referred to as, for example, a reflective substrate with respect to the detection target portion of the lower substrate and the detection target portion of the upper substrate.

The lower substrate, the interposed substrate, and the upper substrate are, for example, resin substrates. Examples of the molding resin for the resin substrate include polycarbonate (PC), acrylic resin (e.g., polymethyl methacrylate (PMMA)), cycloolefin polymer (COP), and cycloolefin copolymer (COC). In the case of coloring the resin substrate, for example, a desired colored resin obtained by adding a coloring agent (e.g., masterbatch, dry color, or the like) of an intended color to the resin can be used as a molding material.

While the present invention has been described above with reference to illustrative embodiments, the present invention is by no means limited thereto. Various changes and variations that may become apparent to those skilled in the art may be made in the configuration and specifics of the present invention without departing from the scope of the present invention.

This application claims priority from Japanese Patent Application No. 2017-098382 filed on May 17, 2017. The entire subject matter of the Japanese Patent Application is incorporated herein by reference.

### Industrial Applicability

As described above, according to the marker unit of the present invention, by covering the boundary with the side surface protrusion of any of the substrates, it is possible to improve the detection accuracy of detecting a detection target portion such as a marker or a detection reference portion, and to improve the installation accuracy of installing the marker unit in an installation target object.

### Reference Signs List

- 1, 2, 3:: marker unit
- 10, 30, 40, 60:: upper substrate
- 11, 31, 51:: interposed substrate
- 12, 22:: lower substrate
- 20, 32:: marker
- 101, 102:: through hole
- 121, 221, 311, 401, 511, 601:: side surface protrusion
- 122:: detection reference portion

## Claims

1. A marker unit comprising:
a laminate in which two or more substrates are laminated, wherein
the laminate has a detection target portion detectable from an upper surface side thereof,
at least at a part of a side surface of the laminate, a boundary between a first substrate that is an uppermost layer of the laminate and a second substrate that is in contact with a lower surface of the uppermost first substrate is covered with a side surface protrusion of any of the substrates constituting the laminate.

2. The marker unit according to claim 1, wherein
at a corner of the side surface of the laminate, the boundary between the first substrate and the second substrate is covered with the side surface protrusion of any of the substrates constituting the laminate.

3. The marker unit according to claim 1 or 2, wherein
over an entire periphery of the side surface of the laminate, the boundary between the first substrate and the second substrate is covered with the side surface protrusion of any of the substrates constituting the laminate.

4. The marker unit according to any one of claims 1 to 3, wherein
the laminate further includes a third substrate,
the first substrate, the second substrate, and the third substrate are laminated in this order from the upper surface side of the laminate,
the side surface of the third substrate has a side surface protrusion protruding upward at least at a corner thereof, and
at the corner of the side surface of the laminate, the boundary between the first substrate and the second substrate and a boundary between the second substrate and the third substrate are covered with the side surface protrusion of the third substrate.

5. The marker unit according to claim 4, wherein
the side surface of the third substrate has a side surface protrusion protruding upward over an entire periphery thereof, and
over the entire periphery of the side surface of the laminate, the boundary between the first substrate and the second substrate and the boundary between the second substrate and the third substrate are covered with the side surface protrusion of the third substrate.

6. The marker unit according to any one of claims 1 to 3, wherein
the side surface of the second substrate has a side surface protrusion protruding upward at least at a corner thereof, and
at the corner of the side surface of the laminate, the boundary between the first substrate and the second substrate is covered with the side surface protrusion of the second substrate.

7. The marker unit according to claim 6, wherein
the side surface of the second substrate has a side surface protrusion protruding upward over an entire periphery thereof, and
over the entire periphery of the side surface of the laminate, the boundary between the first substrate and the second substrate is covered with the side surface protrusion of the second substrate.

8. The marker unit according to claim 6 or 7, wherein
the laminate further includes a third substrate, and
the first substrate, the second substrate, and the third substrate are laminated in this order from the upper surface side of the laminate.

9. The marker unit according to claim 8, wherein
the side surface protrusion of the second substrate is a side surface protrusion protruding upward and downward, and
the boundary between the first substrate and the second substrate and the boundary between the second substrate and the third substrate are covered with the side surface protrusion of the second substrate.

10. The marker unit according to any one of claims 1 to 3, wherein
the side surface of the first substrate has a side surface protrusion protruding downward at least at a corner thereof, and
at the corner of the side surface of the laminate, the boundary between the first substrate and the second substrate is covered with the side surface protrusion of the first substrate.

11. The marker unit according to claim 10, wherein
the side surface of the first substrate has a side surface protrusion protruding downward over an entire periphery thereof, and
over the entire periphery of the side surface of the laminate, the boundary between the first substrate and the second substrate is covered with the side surface protrusion of the first substrate.

12. The marker unit according to claim 10 or 11, wherein
the laminate further includes a third substrate, and
the first substrate, the second substrate, and the third substrate are laminated in this order from the upper surface side of the laminate.

13. The marker unit according to claim 12, wherein
the boundary between the first substrate and the second substrate and the boundary between the second substrate and the third substrate are covered with the side surface protrusion of the first substrate.

14. The marker unit according to any one of claims 1 to 13, wherein
in the laminate, an upper surface of the side surface protrusion is positioned at the same level as an upper surface of the first substrate.

15. The marker unit according to any one of claims 1 to 13, wherein
in the laminate, an upper surface of the side surface protrusion is positioned lower than an upper surface of the first substrate.

16. The marker unit according to any one of claims 1 to 15, wherein
the first substrate is a substrate through which the second substrate can be visually recognized from the upper surface side thereof.

17. The marker unit according to claim 16, wherein
the first substrate is a transparent substrate.

18. The marker unit according to any one of claims 1 to 17, wherein
the detection target portion includes at least one of a marker or a detection reference portion serving as a reference in detecting the marker.

19. The marker unit according to any one of claims 1 to 18, wherein
the first substrate is a detection target substrate having the detection target portion.

20. The marker unit according to any one of claims 1 to 18, wherein
when the laminate does not include a third substrate that is in contact with a lower surface of the second substrate, the second substrate is a detection target substrate having the detection target portion, and
when the laminate includes a third substrate that is in contact with the lower surface of the second substrate, the third substrate is a detection target substrate having the detection target portion.

21. The marker unit according to claim 20, wherein
when the second substrate or the third substrate is the detection target substrate,
the detection target substrate has the detection target portion on an upper surface thereof,
a substrate laminated above the detection target substrate has a through hole at a position corresponding to the detection target portion of the detection target substrate, and
the detection target portion of the detection target substrate is exposed through the through hole on the upper surface side of the laminate.

22. The marker unit according to claim 20 or 21, wherein
when the second substrate or the third substrate is the detection target substrate, and the detection target substrate has the detection reference portion serving as a reference in detecting the marker as the detection target portion,
the detection target substrate has a protrusion protruding upward,
a substrate laminated above the detection target substrate has a through hole at a position corresponding to the protrusion of the detection target substrate,
in the laminate, the protrusion of the detection target substrate is positioned in the through hole of the substrate laminated above the detection target substrate, and
an exposed upper surface of the protrusion serves as the detection reference portion.
